# EUROPEAN PATENT APPLICATION

(11) **EP 3 522 192 A1**
(43) Date of publication of application: **07.08.2019**
(21) Application number: 17856234.4
(22) Date of filing: 27.09.2017
(51) Int. Cl.: H01G 11/36, H01G 11/22

(54) **CARBON MATERIAL, ELECTRODE SHEET FOR CAPACITOR, AND CAPACITOR**

(30) Priority: 30.09.2016 JP 2016193180
(71) Applicant: Sekisui Chemical Co., Ltd., Osaka-shi, Osaka 530-8565 (JP)
(72) Inventor: SASAGAWA, Naoki, Osaka 618-0021 (JP); OHARA, Shunji, Osaka 618-0021 (JP)
(74) Representative: Ter Meer Steinmeister & Partner
(86) International application number: PCT/JP2017/034990
(87) International publication number: WO 2018/062285

(57) **Abstract**

There is provided a carbon material that can increase both the capacitance and the output characteristic of a capacitor. A carbon material for use in an electrode material of a power storage device, comprising a first carbon material having a graphene layered structure, wherein, when an X-ray diffraction spectrum of a mixture of the carbon material and a silicon powder having a volume average particle size of 7.5 ± 2.5 µm in a mixing ratio of 1:1 is determined, a ratio a/b between a height of a peak assigned to the graphene layered structure, a, and a height of a peak assigned to silicon, b, is 0.05 or more and 0.4 or less.

## Description

### Technical Field

The present invention relates to a carbon material, and a capacitor electrode sheet and a capacitor using the carbon material.

### Background Art

Conventionally, carbon materials such as graphite, activated carbon, carbon nanofibers, and carbon nanotubes are widely used as capacitor electrode materials from environmental aspects.

For example, Patent Literature 1 below discloses activated carbon having uniformly communicated macropores as an electrode material for electric double layer capacitors. Patent Literature 1 discloses that the specific surface area of the activated carbon ranges from 1500 to 2300 m²/g.

Patent Literature 2 below discloses a capacitor electrode material comprising a resin-remaining partially exfoliated graphite and a binder resin. The resin-remaining partially exfoliated graphite is a carbon material having a structure in which graphite is partially exfoliated.

### Citation List

### Patent Literature

Patent Literature 1: International Publication No. WO 2013/140937
Patent Literature 2: International Publication No. WO 2015/98758

### Summary of Invention

### Technical Problem

In Patent Literature 1, it is intended to use the activated carbon as described above as a capacitor electrode material to thereby increase the capacitance of a capacitor. However, the activated carbon of Patent Literature 1 cannot increase the output characteristic of a capacitor sufficiently.

It is difficult to achieve the compatibility of the capacitance and the output characteristic of a capacitor even when using the partially exfoliated graphite of Patent Literature 2.

An object of the present invention is to provide a carbon material that can increase both the capacitance and the output characteristic of a capacitor, and a capacitor electrode sheet and a capacitor using the carbon material.

### Solution to Problem

The carbon material according to the present invention is a carbon material for use in an electrode material of a power storage device and comprises a first carbon material having a graphene layered structure, wherein, when an X-ray diffraction spectrum of a mixture of the carbon material and a silicon powder having a volume average particle size of 7.5 ± 2.5 µm in a mixing ratio of 1:1 is determined, a ratio a/b between a height of a peak assigned to the graphene layered structure, a, and a height of a peak assigned to silicon, b, is 0.05 or more and 0.4 or less.

In the carbon material according to the present invention, the ratio a/b is preferably 0.07 or more and 0.3 or less.

In a specific aspect of the carbon material according to the present invention, the first carbon material is graphite or exfoliated graphite.

In another specific aspect of the carbon material according to the present invention, the first carbon material is partially exfoliated graphite, which has a structure in which graphite is partially exfoliated.

In still another specific aspect of the carbon material according to the present invention, the carbon material further comprises a second carbon material present on a surface of or between graphene layers of the first carbon material.

A capacitor electrode sheet according to the present invention comprises the carbon material made according to the present invention.

In a specific aspect of the capacitor electrode sheet according to the present invention, the capacitor electrode sheet further comprises a binder resin.

In another specific aspect of the capacitor electrode sheet according to the present invention, the binder resin is styrene butadiene rubber, polyvinyl butyral, polytetrafluoroethylene, or a fluorine-based polymer.

In still another specific aspect of the capacitor electrode sheet according to the present invention, the fluorine-based polymer is polyvinylidene fluoride.

In still another specific aspect of the capacitor electrode sheet according to the present invention, the capacitor electrode sheet comprises 0.3 to 40 parts by weight of the binder resin relative to 100 parts by weight of the carbon material.

A capacitor according to the present invention comprises the capacitor electrode sheet made according to the present invention.

### Advantageous Effect of Invention

According to the present invention, there can be provided a carbon material that can increase the capacitance of a capacitor while also increasing the output characteristic thereof.

### Description of Embodiment

The details of the present invention will be described hereinbelow.

### [Carbon Material]

The carbon material of the present invention is a carbon material for use in an electrode material of a power storage device. The carbon material comprises a first carbon material having a graphene layered structure.

Examples of the power storage device include, but not particularly limited to, a capacitor such as an electric double layer capacitor or a lithium ion capacitor, a nonaqueous electrolyte primary battery, an aqueous electrolyte primary battery, a nonaqueous electrolyte secondary battery, an aqueous electrolyte secondary battery, and a condenser. The power storage device is preferably a capacitor, and in this case, both the capacitance and the output characteristic can be even more increased.

In the present invention, when an X-ray diffraction (XRD) spectrum of a mixture of the carbon material and a silicon powder is determined, the ratio a/b between the height of a peak assigned to the graphene layered structure, a, and the height of a peak assigned to silicon, b, is 0.05 or more and 0.4 or less. The silicon powder has a volume average particle size of 7.5 ± 2.5 µm, i.e., 5.0 µm or more and 10.0 µm or less. The mixing ratio between the carbon material and the silicon powder in the mixture is 1:1.

The volume average particle size of the silicon powder can be calculated from the particle size distribution determined by, for example, analyzing a sample of the powder dispersed in ethanol with a particle size distribution analyzer that uses the laser diffraction/scattering method as its principle. For example, an analyzer of the product number "LA-950" manufactured by HORIBA, Ltd. can be used as the particle size distribution analyzer.

The XRD spectrum is determined according to wide angle X-ray diffraction method. CuKα ray (wave length 1.541 Å) is used as the X-ray. As an X-ray diffractometer, SmartLab (manufactured by Rigaku Corporation) can be used, for example.

In the XRD spectrum, the peak assigned to the graphene layered structure, i.e., graphite structure appears at or near 20=26.4. On the other hand, the peak assigned to the silicon powder appears at or near 2θ=28.5. Therefore, the ratio a/b can be determined as a peak height ratio between a peak at or near 2θ=26.4 and a peak at or near 2θ=28.5 (peak at or near 2θ=26.4 / peak at or near 2θ=28.5).

The carbon material of the present invention comprises the first carbon material having a graphene layered structure and therefore has excellent conductivity. Thus, the carbon material can effectively increase the responsiveness to the charge and discharge of the capacitor, i.e., the output characteristic. In addition, the carbon material of the present invention has the ratio a/b within the range described above, and therefore has a high specific surface area. Thus, the carbon material can increase the capacitance of a capacitor.

In contrast, in conventional carbon materials, with increasing the capacitance, an amorphous structure formed by breaking the regular graphene layered structure (graphite structure) is adopted. Therefore, in the XRD spectrum of a conventional carbon material, a peak at or near 2θ=26.4 assigned to the graphene layered structure does not appear. Since conventional carbon materials thus do not have any graphene layered structure, they have a low conductivity compared to the carbon material of the present invention, and cannot increase the output characteristic of a capacitor effectively. Examples of such conventional carbon materials include activated carbon and oxidized graphene.

As a result of earnest studies, the present inventors have found that when the carbon material comprising a first carbon material having a graphene layered structure has a ratio a/b within the specific range described above, both the capacitance and the output characteristic of a capacitor can be increased, and thus have reached the invention of the present application.

In the present invention, it is preferred to further comprise a second carbon material present on a surface of or between the graphene layers of the first carbon material. The second carbon material may be combined with the first carbon material to thereby form a composite. It is more preferred for the second carbon material to be present between the graphene layers of the first carbon material. When the second carbon material is present between the graphene layers of the first carbon material, the micropore size of the first carbon material can be even more enlarged. In such a case, the area that can contribute to adsorption and desorption of ions can be even more enlarged to thereby even more increase the conductivity between the carbon materials. The deposition properties can also be even more improved. In the case where the carbon material further comprises the second carbon material, the ratio a/b is determined under the condition that the carbon material includes the second carbon material.

It is preferred for the second carbon material to have a moderate conductivity. In this case, the conductivity can be even more increased between the first carbon materials through the second carbon material.

As described above, when an X-ray diffraction (XRD) spectrum of a mixture of the carbon material and a silicon powder is determined, the ratio a/b between the height of a peak assigned to the graphene layered structure, a, and the height of a peak assigned to silicon, b, is 0.05 or more and 0.4 or less. With the ratio a/b equal to or larger than the lower limit, the conductivity of the carbon material can be increased.

On the other hand, with the ratio a/b equal to or smaller than the upper limit, the specific surface area of the carbon material can be enlarged. The ratio a/b indicates the degree of exfoliation of the carbon material having a graphene layered structure.

In view of even more increasing the conductivity of the carbon material and even more enlarging the specific surface area of the carbon material, the ratio a/b is preferably 0.07 or more and 0.3 or less. The ratio a/b is more preferably 0.08 or more and 0.25 or less.

The determination of the ratio a/b of the carbon material having a graphene layered structure can be carried out, for example, using an X-ray diffractometer in the following manner.

First, the carbon material as the raw material and the Si nanoparticle (silicon powder, manufactured by Aldrich) are mixed in a ratio of 1:1 in a sample jar to prepare a mixture as a determination sample. Then, the XRD spectrum of the mixture prepared is determined. In the XRD spectrum obtained, the height of a peak assigned to Si (silicon) (at or near 2θ=28.5 degrees), b, is normalized to 1, and the height of a peak assigned to the graphene layered structure (Gr, at or near 2θ=26.4 degrees), a, is compared thereto to thereby determine the ratio a/b. Specifically, when the peak ratio a/b, i.e., the Gr/Si ratio is small, it is appreciated that the graphene layered structure is little, and that the exfoliated site is thus increased. A Gr/Si ratio of 0.05 or more indicates that graphene layered structure sufficient to impart conductivity is present. At this time, the weight of substances such as a composite is excluded so that the mixing ratio between the carbon material as the main component and the Si nanoparticle is 1:1 to calculate the peak ratio.

With the Gr/Si ratio of the carbon material within the above-described range, an electrode material having both a large specific surface area and high conductivity can be prepared, and a capacitor having large capacitance and high output can be prepared therefrom. The same is also applied to the case where the second carbon material is intercalated in an exfoliated part.

In view of even more increasing the conductivity of the carbon material to thereby even more increase the output characteristic of a capacitor, the ratio a/b is preferably 0.07 or more, more preferably 0.1 or more, further preferably 0.15 or more, particularly preferably 0.2 or more.

In view of even more increasing the specific surface area of the carbon material to thereby even more increase the capacitance of a capacitor, the ratio a/b is preferably 0.3 or less, more preferably 0.25 or less, further preferably 0.2 or less, particularly preferably 0.15 or less.

In the present invention, the specific surface area according to BET (BET specific surface area) of the carbon material is preferably 100 m²/g or more, more preferably 300 m²/g or more, further preferably 500 m²/g or more. In this case, the capacitance of a capacitor can be even more increased. In the case where the carbon material further comprises the second carbon material, the BET specific surface area is determined under the condition that the carbon material includes the second carbon material. The upper limit of the BET specific surface area is not particularly limited and can be 4000 m²/g or less, for example.

In the present invention, the powder resistance of the carbon material is preferably 5.0×10⁻² Ω or less, more preferably 1.0×10⁻² Ω or less. In this case, the output characteristic of a capacitor can be even more increased. In the case where the carbon material further comprises the second carbon material, the powder resistance is determined under the condition that the carbon material includes the second carbon material. The lower limit of the powder resistance is not particularly limited and can be 1.0×10⁻⁶ Ω or more, for example. The powder resistance can be obtained by, for example, applying a pressure to the powder stepwise by an increment of 4 kN and determining the resistance value under 20 kN according to four point probe method. The powder resistance can be determined using, for example, a low resistivity meter for powder (manufactured by Mitsubishi Chemical Analytech Co., Ltd., Loresta GX).

As described hereinbefore, the carbon material of the present invention can achieve the compatibility of the capacitance and the output characteristic of a capacitor at high levels, and therefore can be suitably used for a capacitor electrode material. The shape of the capacitor electrode material is not particularly limited, and can be any appropriate shape such as a film, a sheet, and particles.

The details of the carbon material of the present invention and the production method thereof will be described below.

### (First Carbon Material)

The first carbon material used in the present invention is a carbon material having a graphene layered structure.

The carbon material having a graphene layered structure is not particularly limited, but graphite or exfoliated graphite can be preferably used. Partially exfoliated graphite, which has a structure in which graphite is partially exfoliated, can be more preferably used. Partially exfoliated graphite is a material whose ratio between the graphene layered structure and the exfoliated site, in other words, degree of exfoliation can be controlled through the production method thereof.

Graphite is a laminate of a plurality of graphene sheets. The number of layered graphene sheets of graphite is 100000 or more and at most about 1000000. Natural graphite, artificial graphite, expanded graphite, or the like can be used as graphite. In expanded graphite, the gap between graphene layers is larger than that in normal graphite. Therefore, expanded graphite is preferably used as graphite.

Exfoliated graphite can be obtained by subjecting original graphite to an exfoliation process, and refers to a graphene sheet laminate having a smaller thickness than that of the original graphite. The number of layered graphene sheets of exfoliated graphite should be smaller than that of the original graphite. The exfoliation process can also increase the specific surface area.

The number of layered graphene sheets of exfoliated graphite is preferably 1000 or less, more preferably 500 or less.

Partially exfoliated graphite is obtained by providing a composition including graphite or primary exfoliated graphite and a resin fixed thereto through grafting or adsorbing, and conducting thermal decomposition of the resin included in the composition.

The dimension of the gap between graphene layers in the graphite or the primary exfoliated graphite is enlarged through the thermal decomposition. More specifically, the gaps between graphene layers are enlarged over a region from the edge to the somewhat inner part in the graphene laminate such as graphite or primary exfoliated graphite. That is, there can be provided a structure in which a part of graphite is exfoliated in the edge portion while graphite layers remain laminated in the center portion similar to the original graphite or primary exfoliated graphite. Thus, partially exfoliated graphite has a structure in which graphite is partially exfoliated.

As described above, "graphite is partially exfoliated" means that the gaps between graphene layers are widen over a region from the edge to the somewhat inner part in a graphene laminate, in other words, a part of graphite is exfoliated at the edge. It also means that graphite layers are laminated in the center portion in the same manner as in the original graphite or primary exfoliated graphite. Thus, the portion where a part of graphite is exfoliated at the end connects with the center portion. The first carbon material may include a flake formed by exfoliating the edge of graphite.

More specifically, such partially exfoliated graphite can be obtained according to the production method including the following two steps: providing a raw material composition including graphite or primary exfoliated graphite and a resin fixed thereto, and conducting thermal decomposition of the resin included in the raw material composition to thereby exfoliating graphite or primary exfoliated graphite while allowing a part of the resin to remain. For example, it can be produced according to the same method as the method for producing exfoliated graphite-resin composite material described in International Publication No. WO 2014/34156. It is preferred to use expanded graphite as graphite, because expanded graphite can be even more easily exfoliated.

The heating temperature of the thermal decomposition is not particularly limited, and can be, for example, 200°C or more and 500°C or less.

The heating time of the thermal decomposition is preferably 2 hours or more, more preferably 3 hours or more, and preferably 12 hours or less, more preferably 6 hours or less. With the heating time equal to or more than the lower limit mentioned above, the degree of exfoliation can be even more increased, and the specific surface area can thus be more increased. With the heating time equal to or less than the upper limit mentioned above, re-stacking of graphite can be even more prevented, and the specific surface area can be thus even more increased. The heating time varies depending on the resin used, and can be adjusted according to the resin used.

In the thermal decomposition in the present invention, it is preferred to conduct thermal decomposition while allow a very small amount of the resin included in the composition to remain, in view of even more decreasing the resistance value. Accordingly, in partially exfoliated graphite, a part of the resin may remain. In the present invention, after obtaining partially exfoliated graphite with a remaining resin according to the method described above, the amount of the remaining resin may be decreased, before use, by processing through, for example, heating in another step.

The resin is preferably, but not particularly limited to, a polymer of a radical polymerizable monomer. The resin may be a copolymer of two or more radical polymerizable monomers, or may be a homopolymer of a single radical polymerizable monomer.

Examples of the resin used include polypropylene glycol, polyglycidyl methacrylate, polyvinyl acetate, polyvinyl butyral, polyacrylic acid, polyethylene glycol, or styrene butadiene rubber. Preferred examples include polypropylene glycol or polyvinyl acetate. When using polypropylene glycol or polyvinyl acetate, the specific surface area of partially exfoliated graphite can be even more increased.

The amount of the resin remaining in partially exfoliated graphite is preferably 5 parts by weight to 350 parts by weight, more preferably 15 parts by weight to 250 parts by weight, even more preferably 20 parts by weight to 200 parts by weight, relative to 100 parts by weight of partially exfoliated graphite. With the amount of the remaining resin within the above mentioned range, the specific surface area of partially exfoliated graphite can be even more increased.

Furthermore, when the amount of the resin remaining in partially exfoliated graphite is decreased, the conductivity can be even more improved, and the output characteristic of a capacitor can thus be even more improved. At this time, a removing method involving heating, a chemical process, or the like can be employed, and the structure can also be partially modified.

When partially exfoliated graphite is combined with a microparticle described later, re-stacking of graphite is reduced by the microparticle, and thus the resin remaining in partially exfoliated graphite can be removed.

Partially exfoliated graphite has many portions where graphite is exfoliated. A portion where graphite is exfoliated refers to a portion where a part of a graphene laminate or graphene is partially exfoliated in graphite or primary exfoliated graphite.

Partially exfoliated graphite also has, in the center portion, a structure in which graphene is laminated similarly to the original graphite or primary exfoliated graphite. Of course, in the center portion, there may be a portion where the gap between graphene layers is enlarged compared to the original graphite or primary exfoliated graphite through thermal decomposition of the resin.

In partially exfoliated graphite, the abundance ratio between the edge portion, in which graphite is partially exfoliated, and the unexfoliated center portion, edge portion: center portion, is preferably 1:30 to 1:60. In this case, the edge portion may be asymmetric and irregular. With the abundance ratio between the edge portion and the center portion within the range mentioned above, the compatibility of the even larger specific surface area and the even higher conductivity can be achieved.

In the edge portion, the number of graphene layers in the part where graphite is partially exfoliated is small. The number of graphene layers in the part where graphite is partially exfoliated is preferably 100 or less, and more preferably 50 or less, and further preferably 30 or less. When the number of graphene layers in the exfoliated part is equal to or less than the upper limit mentioned above, the compatibility with a binder resin described later can be even more increased.

In partially exfoliated graphite, the gap dimension between the graphene layers is enlarged, and the number of graphene layers in the exfoliated part in the edge portion is small. Therefore, the specific surface area is large.

The specific surface area of the first carbon material having such a graphene layered structure is preferably 500 m²/g or more and 3000 m²/g or less as determined according to methylene blue adsorption method.

If the specific surface area of the first carbon material is too small as determined according to methylene blue adsorption method, the capacitance of a capacitor may not be increased sufficiently. If the specific surface area of the first carbon material is too large as determined according to methylene blue adsorption method, re-stacking or scroll may occur, and the optimum structure may not be maintained when the carbon material is made into a capacitor electrode sheet.

The specific surface area according to methylene blue adsorption method can be determined by the following method.

First, the amount of methylene blue adsorbed onto the measurement sample is determined. The amount of methylene blue adsorbed is determined on the basis of the difference between the absorbance of a methylene blue solution in methanol having a methylene blue concentration of 10 mg/L and the absorbance of a supernatant obtained by adding the measurement sample to the methylene blue solution in methanol, and stirring and centrifuging the resultant.

In more detail, the amount of methylene blue adsorbed can be determined according to the following method.

First, a measurement sample is added to a methylene blue solution in methanol having a methylene blue concentration of 10 mg/L, followed by stirring. Then, the resultant was centrifuged to obtain a supernatant, and the change of the absorbance at the maximum absorption wavelength is observed on the supernatant obtained. Methylene blue is adsorbed onto a measurement sample through π-conjugation. Methylene blue generates fluorescence by light irradiation. When methylene blue is adsorbed onto the measurement sample, methylene blue does not generate fluorescence, i.e., the fluorescence intensity is decreased. Accordingly, the amount of methylene blue adsorbed can be determined from the decrease in the fluorescence intensity of the supernatant relative to that of the original methylene blue solution.

Next, the specific surface area is calculated from the amount of methylene blue adsorbed thus obtained. There is a correlation between the amount of methylene blue adsorbed and the specific surface area of the first carbon material. For a spherical graphite particle conventionally known, there is a relationship: y≈0.13x, wherein x represents the specific surface area (m²/g) determined according to BET and y represents the amount of methylene blue adsorbed (µ mol/g). This indicates that as the specific surface area is larger, the amount of methylene blue adsorbed is larger. As the spherical graphite particle, "Ketjenblack EC300JD" (product name) manufactured by Lion Specialty Chemicals Co., Ltd. or "RPSA-2" (product name) manufactured by The Association of Powder Process Industry and Engineering, JAPAN can be used. A wet specific surface area is calculated from the amount of methylene blue adsorbed on the supposition that the value of the specific surface area of the graphite particle obtained from the amount of methylene blue adsorbed is equal to that obtained from a determination according to BET method. As a result, the relational expression between the amount of methylene blue adsorbed and the wet specific surface area according to methylene blue adsorption method is as follows: specific surface area according to methylene blue adsorption method (m²/g)= amount of methylene blue adsorbed according to determination described above (µ mol/g)/ 0.13. The coefficient of this relational expression is a correlation coefficient on the supposition that there is substantially no difference between the specific surface area according to dry method (BET method) and the specific surface area according to wet method (the wet specific surface area).

The median size of the first carbon material having a graphene layered structure is preferably 1 µm or more and 100 µm or less. If the median size of the first carbon material is too small, the size of micropores is also small, which results in the slow ion diffusion, and as a result, the output characteristic may not be increased sufficiently. If the median size of the first carbon material is too large, the specific surface area of a composite formed by combining the first carbon material with the second carbon material may not be increased sufficiently.

In the case where the first carbon material having a graphene layered structure is combined with the second carbon material as described later, the median size of the first carbon material is more preferably 2 µm or more, further preferably 5 µm or more in view of even more increasing the specific surface area to thereby increase the capacitance of a capacitor even more. The median size of the first carbon material is more preferably 60 µm or less, further preferably 40 µm or less.

The median size mentioned above is a diameter corresponding to the median value of the particle size in the particle size distribution of a powder. The particle size distribution can be determined by, for example, analyzing a sample of a powder dispersed in ethanol with a particle size distribution analyzer that uses the laser diffraction/scattering method as its principle (the product number "LA-950" manufactured by HORIBA, Ltd.), and the median size can be calculated therefrom.

### Second Carbon Material;

As described above, the first carbon material may be combined with the second carbon material before use. The carbon material of the present invention may further include the second carbon material present on the surface of or between graphene layers of the first carbon material. When the first carbon material is partially exfoliated graphite, the second carbon material may be present in the exfoliated site.

The second carbon material is preferably, but not particularly limited to, a microparticle capable of physically adsorbing/desorbing ions and/or a microparticle having conductivity, that is, a conductive microparticle.

Specifically, activated carbon, carbon black, graphene oxide, graphite, oxidized graphite, carbon nanotube, or the like can be used. These microparticles may be used individually or in combinations of two or more thereof.

The median size of the microparticle is preferably 10 nm or more and is preferably 20 µm or less.

If the median size of the microparticle is too small, the micropore size cannot be enlarged sufficiently, for example, upon the intercalation into the exfoliated site, and aggregation of the microparticles may be promoted. If the median size of the microparticle is too large, the microparticles may not be intercalated into the exfoliated site.

In view of even more increasing the output characteristic of a capacitor, the median size of the microparticle is more preferably 20 nm or more, further preferably 30 nm or more, and more preferably 10 µm or less, further preferably 5 µm or less.

The upper limit of the particle distribution of the microparticle is desirably 50 µm or less.

The shape of the microparticle is not limited to a sphere, and may be any of various shapes including a fragment, an elliptical shape, or a scaly shape.

The weight ratio between the second carbon material and the first carbon material having a graphene layered structure (second carbon material/ first carbon material) is preferably 1/100 or more and 4 or less. If the weight proportion of the first carbon material having a graphene layered structure is too large, the amount of the second carbon material necessary to be intercalated into the layers of the first carbon material may not be secured. Therefore, the weight ratio (second carbon material/ first carbon material) is preferably 1/20 or more. On the other hand, if the weight proportion of the second carbon material is too large, the proportion of the second carbon material that does not contribute to form a composite increases, and thus, the effect of the composite described above may not be exhibited.

In the present invention, the second carbon material is preferably present between the layers of the first carbon material having a graphene layered structure in the composite. That is, preferably, the second carbon material is intercalated into the layers of the first carbon material having a graphene layered structure in the composite. When the second carbon material is present between the layers of the first carbon material having a graphene layered structure, the micropore size is enlarged in an electrolyte solution and the output characteristic can be thus even more increased.

The composite can be obtained by mixing the first carbon material having a graphene layered structure and the second carbon material. Examples of the mixing method include a dry method in which both powders are kneaded, a semi-wet method in which one of the powders is dispersed in water or an organic solvent, and a wet method in which both powders are dispersed in water or an organic solvent. In the case where the second carbon material is intercalated into the graphene layers, the wet method is preferred because the gap between the graphene layers is enlarged by the solvent.

For efficient adsorption of the second carbon material, it is preferred that the solvent for the wet method be a solvent that is not an excessively good solvent for the first carbon material having a graphene layered structure and the second carbon material. If an excessively good solvent is used, the adsorption of the second carbon material may not proceed completely. On the other hand, an excessively poor solvent is used, aggregates tend to be formed, and the specific surface area may not be increased sufficiently.

As the solvent that is not an excessively good solvent for the first carbon material having a graphene layered structure and the second carbon material, an organic solvent such as ethanol, propanol, propylene carbonate, or diethyl carbonate can be used. The solvent that is not an excessively good solvent for the first carbon material having a graphene layered structure and the second carbon material can also be prepared by changing the type and the concentration of a dispersing agent in an aqueous system.

### [Capacitor electrode sheet]

The capacitor electrode sheet of the present invention comprises the above described carbon material made according to the present invention. Therefore, the capacitor electrode sheet of the present invention can increase both the capacitance and the output characteristic of a capacitor.

### (Binder Resin)

The capacitor electrode sheet according to the present invention may further include a binder resin. As the binder resin, polyvinyl butyral, polytetrafluoroethylene, styrene butadiene rubber, polyimide resin, a fluorine-based polymer such as polyvinylidene fluoride (PVDF), or a water-soluble carboxymethyl cellulose can be used, for example. Polytetrafluoroethylene can be preferably used. When polytetrafluoroethylene is used, dispersibility and heat resistance can be even more increased.

The amount of the binder resin incorporated is preferably within the range from 0.3 to 40 parts by weight, more preferably within the range from 0.3 to 15 parts by weight, relative to 100 parts by weight of the carbon material having a graphene layered structure. When the amount of the binder resin incorporated is within the range mentioned above, the capacitance of a capacitor can be even more increased.

### (Method for Producing Electrode Sheet)

The electrode sheet according to the present invention can be produced by shaping a composition comprising the carbon material and, if needed, the binder resin and a solvent.

Shaping of the composition can be carried out through, for example, forming the composition into a sheet with a roller and then drying the resultant. Alternatively, shaping can be carried out through applying a coating liquid composed of the carbon material, the binder resin, and a solvent to a current collector, and then drying the resultant. As the solvent, ethanol, N-methylpyrrolidone (NMP), water, or the like can be used.

The resulting shaped composition may be further pressed using a press roll to obtain the electrode sheet of the present invention.

An electrode sheet has been described herein as the capacitor electrode material comprising the carbon material of the present invention. However, as described hereinbefore, the shape of the electrode material is not particularly limited, and can be any appropriate shape such as a film and particles.

### [Capacitor]

The capacitor according to the present invention comprises the above-described capacitor electrode sheet made according to the present invention. Therefore, in the capacitor of the present invention, both the capacitance and the output characteristic are increased. Examples of the capacitor include an electric double-layer capacitor and a lithium ion capacitor.

As an electrolyte solution for the electric double-layer capacitor, an aqueous system may be used, or a non-aqueous system (organic system) may be used.

The aqueous electrolyte solution may be, for example, an electrolyte solution using water as a solvent and sulfuric acid or potassium hydroxide as an electrolyte.

On the other hand, as the non-aqueous electrolyte solution, those using the following solvent and electrolyte can be used, for example. Specifically, examples of the solvent include propylene carbonate (PC), ethylene carbonate (EC), dimethyl carbonate (DMC), or diethyl carbonate (DEC). Examples of the electrolyte include lithium hexafluorophosphate (LiPF₆), lithium tetrafluoroborate (LiBF₄), tetraethylammonium tetrafluoroborate (TEABF₄), or triethylmethylammonium tetrafluoroborate (TEMABF₄).

When carrying out cyclic voltammetry (CV) measurement, the capacitor of the present invention preferably has an output characteristic of 0.4 or more, more preferably 0.5 or more. In view of the diffusion rate of ions in the electrolyte solution, the upper limit thereof may be about 1.0.

The output characteristic is defined as a ratio between the capacitances when the sweep rate of the external voltage applied is changed between 10 mV/s and 50 mV/s in carrying out cyclic voltammetry (CV) measurement in the electrolyte solution. Specifically, the output characteristic can be determined as C₁₀/C₅₀, wherein C₁₀ represents the capacitance at a sweep rate of 10 mV/s and C₅₀ represents the capacitance at a sweep rate of 50 mV/s.

The present invention now will be made clearer by way of specific examples thereof and comparative examples, but the present invention is not limited to the following examples.

### (Example 1)

### Preparation of partially exfoliated graphite as carbon material;

20 g of expanded graphite, 40 g of azodicarbonamide as a heat decomposable foaming agent, 400 g of polypropylene glycol, and 400 g of tetrahydrofuran as a solvent were mixed to provide a raw material composition. As the expanded graphite, "PF powder 8" (product name, BET specific surface area = 22 m²/g) manufactured by Toyo Tanso Co., Ltd. was used. As the azodicarbonamide (ADCA), "AC#R-K3" (product name, thermal decomposition temperature: 210°C) manufactured by EIWA CHEMICAL IND. CO., LTD. was used. As the polypropylene glycol, "SANNIX GP-3000" (product number, number average molecular weight = 3000) manufactured by Sanyo Chemical Industries, Ltd. was used.

The raw material composition was irradiated with ultrasonic at 100 W and an oscillating frequency of 28 kHz for 2 hours using an ultrasonication device (manufactured by HONDA ELECTRONICS Co., LTD.). Polypropylene glycol (PPG) was thus adsorbed onto expanded graphite through the ultrasonication. Thus, a composition including expanded graphite and polypropylene glycol adsorbed thereon was provided.

After the ultrasonication, the composition was shaped by solvent casting, and kept for drying at a temperature of 80°C for 2 hours and then at a temperature 110°C for 1 hour. Then, the shaped composition was kept at a temperature of 150°C for 1 hour and further kept at a temperature of 230°C for 2 hours. Thus, ADCA was thermally decomposed in the composition to foam.

Then, a heating process was conducted by keeping the resultant at a temperature of 400°C for 3 hours. Thus, polypropylene glycol was thermally decomposed to obtain partially exfoliated graphite.

### Preparation of electrode sheet;

The partially exfoliated graphite thus obtained was dispersed in N-methylpyrrolidone, and PVDF as a binder resin was added thereto in an amount of 1 part by weight relative to 9 parts by weight of the partially exfoliated graphite, followed by mixing. The resulting coating liquid was applied to aluminum foil and dried. Then, the resulting coating was pressed at room temperature for 30 seconds using a press roll (manufactured by TOHO INTERNATIONAL INC., model number "BLUD90A") under a condition of a clearance of 80 µm to thereby obtain an electrode sheet.

### (Example 2)

Partially exfoliated graphite as a carbon material was obtained by the same production method as in Example 1, except that a heating process was conducted by keeping at a temperature of 400°C for 4.5 hours instead of keeping at a temperature of 400°C for 3 hours in the heating process for thermally decomposing polypropylene glycol in Example 1. The longer heating time allowed exfoliation to progress even more. An electrode sheet was obtained in the same manner as in Example 1 except for the above.

### (Example 3)

Partially exfoliated graphite as a carbon material was obtained by the same production method as in Example 1, except that a heating process was conducted by keeping at a temperature of 380°C for 6 hours instead of keeping at a temperature of 400°C for 3 hours in the heating process for thermally decomposing polypropylene glycol in Example 1. The longer heating time at a lower temperature further promoted the graft reaction of the resin (polypropylene glycol) to thereby allow exfoliation to progress even more. An electrode sheet was obtained in the same manner as in Example 1 except for the above.

### (Example 4)

An electrode sheet was obtained in the same manner as in Example 1, except that a composite was used as a carbon material in which composite was obtained by combining 60% by weight of partially exfoliated graphite (the first carbon material) obtained in Example 1 with 40% by weight of Ketjenblack (manufactured by Lion Specialty Chemicals Co., Ltd., product number "EC300J") as a microparticle (the second carbon material). The composite with the microparticle was obtained by dispersing partially exfoliated graphite and Ketjenblack separately in THF, then mixing the resulting dispersions together, filtering the mixture, and drying the resultant.

### (Comparative Example 1)

Partially exfoliated graphite as a carbon material was obtained by the same production method as in Example 1, except that a heating process was conducted by keeping at a temperature of 400°C for 24 hours instead of keeping at a temperature of 400°C for 3 hours in the heating process for thermally decomposing polypropylene glycol in Example 1. In Comparative Example 1, the too long heating time excessively decreased the amount of the resin to thereby allow re-stacking to proceed. An electrode sheet was obtained in the same manner as in Example 1 except for the above.

### (Comparative Example 2)

Partially exfoliated graphite as a carbon material was obtained by the same production method as in Example 1, except that a heating process was conducted by keeping at a temperature of 400°C for 1.5 hours instead of keeping at a temperature of 400°C for 3 hours in the heating process for thermally decomposing polypropylene glycol in Example 1. In Comparative Example 2, the carbon material failed to sufficiently exfoliate due to the shorter heating time. An electrode sheet was obtained in the same manner as in Example 1 except for the above.

### (Comparative Example 3)

Activated carbon (manufactured by Wako Pure Chemical Corporation) as a carbon material was dispersed in N-methylpyrrolidone, and PVDF as a binder resin was added thereto in an amount of 1 part by weight relative to 9 parts by weight of the activated carbon, followed by mixing. The resulting coating liquid was applied to aluminum foil and dried. Then, the resulting coating was pressed at room temperature using a press roll (model number "BLUD90A" manufactured by TOHO INTERNATIONAL INC.) under a condition of a clearance of 80 µm to obtain an electrode sheet.

### (Comparative Example 4)

Graphene (manufactured by GX sciences, product number "C-500") as a carbon material was dispersed in N-methylpyrrolidone, and PVDF as a binder resin was added thereto in an amount of 1 part by weight relative to 9 parts by weight of the graphene, followed by mixing. The resulting coating liquid was applied to aluminum foil and dried. Then, the resulting coating was pressed at room temperature using a press roll (model number "BLUD90A" manufactured by TOHO INTERNATIONAL INC.) under a condition of a clearance of 80 µm to obtain an electrode sheet.

### (Comparative Example 5)

Exfoliated graphite (manufactured by Ito Graphite Co., Ltd., product number "PC-H") as a carbon material was dispersed in N-methylpyrrolidone, and PVDF as a binder resin was added thereto in an amount of 1 part by weight relative to 9 parts by weight of the exfoliated graphite, followed by mixing. The resulting coating liquid was applied to aluminum foil and dried. Then, the resulting coating was pressed at room temperature using a press roll (manufactured by TOHO INTERNATIONAL INC., model number "BLUD90A") under a condition of a clearance of 80 µm to obtain an electrode sheet.

### (Evaluation of ratio a/b)

The ratio a/b was determined as follows.

First, the carbon material used in any one of Examples 1 to 4 and Comparative Examples 1 to 5 and a silicon powder (manufactured by Aldrich, volume average particle size: 8.6 µm) were mixed in a ratio of 1:1 in a sample jar to prepare a mixture as a determination sample. Then, the XRD spectrum of the mixture obtained was determined. The XRD spectrum was determined according to wide angle X-ray diffraction method using SmartLab (manufactured by Rigaku Corporation) as an X-ray diffractometer. CuKα ray (wave length 1.541 Å) was used as the X-ray. The volume average particle size of the silicon powder was calculated from the particle size distribution determined by analyzing a sample of the powder dispersed in ethanol with a particle size distribution analyzer that uses the laser diffraction/scattering method as its principle. An analyzer of the product number "LA-950" manufactured by HORIBA, Ltd. was used as the particle size distribution analyzer.

From the XRD spectrum obtained, the ratio a/b between the height of a peak (26.0 degrees < 2θ < 27.0 degrees) assigned to the graphite structure, a, and the height of a peak (28.0 degrees < 2θ < 29.0 degrees) assigned to silicon, b, was determined. The results are shown in Table 1 below.

### (Evaluation of capacitor by cyclic voltammetry measurement)

The capacitance and the output characteristic were evaluated through the cyclic voltammetry measurement according to the following method.

In the cyclic voltammetry measurement, electrodes stamped out from the electrode sheet according to any one of Examples 1 to 4 and Comparative Examples 1 to 5 were used as a working electrode and a counter electrode. Three electrodes including these and an Ag wire as a reference electrode were immersed in an aqueous electrolyte solution or an organic electrolyte solution, and the measurement was carried out. The capacitance value obtained from the resulting data was divided by the weight of the electrode to calculate the capacitance per weight.

Measurement was carried out while the sweep rate of the external voltage applied was changed between 10 mV/s and 50 mV/s. The capacitance when the sweep rate was 10 mV/s is designated as C₁₀, and the capacitance when the sweep rate was 50 mV/s is designated as C₅₀.

The capacitance and the output characteristic were evaluated according to the following criteria. C₁₀ was used for the evaluation of the capacitance. The output characteristic was evaluated on the basis of C₁₀/C₅₀. The results are shown in Table 1 below.

### [Evaluation criteria for capacitance per weight]

Excellent: 10F/g ≤ C₁₀
Good: 4F/g ≤ C₁₀ < 10F/g
Fair: 1F/g ≤ C₁₀ < 4F/g
Poor: 0F/g < C₁₀ < 1F/g

### [Evaluation criteria for output characteristic]

Excellent: 0.5 ≤ C₁₀/C₅₀
Good: 0.4 ≤ C₁₀/C₅₀ < 0.5
Fair: 0.2 ≤ C₁₀/C₅₀ < 0.4
Poor: 0 < C₁₀/C₅₀ < 0.2

### (Evaluation of BET specific surface area)

100 mg of a carbon material was weighed and subjected to the measurement with a specific surface area measuring instrument (manufactured by Shimadzu Corporation, ASAP-2020) using a nitrogen gas. The results are shown in Table 1 below.

### (Evaluation of powder resistance)

100 mg or more of a carbon material was weighed and subjected to the measurement according to four point probe method using a resistance measuring instrument for powder with low resistance (manufactured by Mitsubishi Chemical Analytech Co., Ltd., Loresta GX). A pressure was applied to the powder stepwise by an increment of 4 kN, and the resistance value under 20 kN was used. The results are shown in Table 1 below.

**[Table 1]**

| | Ex. 1 | Ex. 2 | Ex. 3 | Ex. 4 | Comp. Ex.1 | Comp. Ex.2 | Comp. Ex.3 | Comp. Ex.4 | Comp. Ex.5 |
|---|---|---|---|---|---|---|---|---|---|
| XRD(Ratio a/b) | 0.35 | 0.18 | 0.10 | 0.09 | 0.96 | 0.47 | 0.026 | 0.034 | 1.5 |
| BET specific surface area / m² · g⁻¹ | 112 | 177 | 214 | 392 | 42 | 89 | 1608 | 475 | 14 |
| Powder resistance / Ω | 9.02 × 10⁻³ | 6.42 × 10⁻² | 8.52 × 10⁻² | 1.94 × 10⁻² | 3.78 × 10⁻² | 9.89 ×10⁻² | 6.76 × 10² | 1.19 × 10⁻¹ | 3.09 × 10⁻³ |
| Output characteristic | Excellent | Good | Good | Good | Good | Fair | Poor | Fair | Excellent |
| Capacitance / F · g⁻¹ | Good | Good | Good | Excellent | Poor | Poor | Excellent | Fair | Poor |

It is clear from Table 1 that both the capacitance and the output characteristic of a capacitor are increased when using the electrode sheet according to any of Examples 1 to 4. It is also clear that on the other hand, either the capacitance or the output characteristic of a capacitor is not increased when using the electrode sheet according to any of Comparative Examples 1 to 5.

## Claims

1. A carbon material for use in an electrode material of a power storage device, comprising a first carbon material having a graphene layered structure,
when an X-ray diffraction spectrum of a mixture of the carbon material and a silicon powder having a volume average particle size of 7.5 ± 2.5 µm in a mixing ratio of 1:1 is determined, a ratio a/b between a height of a peak assigned to the graphene layered structure, a, and a height of a peak assigned to silicon, b, being 0.05 or more and 0.4 or less.

2. The carbon material according to claim 1, wherein the ratio a/b is 0.07 or more and 0.3 or less.

3. The carbon material according to claim 1 or 2, wherein the first carbon material is graphite or exfoliated graphite.

4. The carbon material according to any one of claims 1 to 3, wherein the first carbon material is partially exfoliated graphite, which has a structure in which graphite is partially exfoliated.

5. The carbon material according to any one of claims 1 to 4, wherein the carbon material further comprises a second carbon material present on a surface of or between graphene layers of the first carbon material.

6. A capacitor electrode sheet comprising the carbon material according to any one of claims 1 to 5.

7. The capacitor electrode sheet according to claim 6, wherein the capacitor electrode sheet further comprises a binder resin.

8. The capacitor electrode sheet according to claim 7, wherein the binder resin is styrene butadiene rubber, polyvinyl butyral, polytetrafluoroethylene, or a fluorine-based polymer.

9. The capacitor electrode sheet according to claim 8, wherein the fluorine-based polymer is polyvinylidene fluoride.

10. The capacitor electrode sheet according to any one of claims 7 to 9, wherein the capacitor electrode sheet comprises 0.3 to 40 parts by weight of the binder resin relative to 100 parts by weight of the carbon material.

11. A capacitor comprising the capacitor electrode sheet according to any one of claims 6 to 10.
